# EUROPÄISCHE PATENTSCHRIFT

(11) **EP 0 696 708 B1**
(45) Veröffentlichungstag und Bekanntmachung des Hinweises auf die Patenterteilung: **03.06.1998**
(21) Anmeldenummer: 95111445.3
(22) Anmeldetag: 20.07.1995
(51) Int. Cl.: F23N 5/08, G01J 5/00

(54) **Verfahren zur Regelung der Feuerung bei Verbrennungsanlagen, insbesondere Abfallverbrennungsanlagen**
Method for controlling the burning in combustion plants, especially waste incineration plants
Méthode de régulation de la combustion pour installations de combustion, notammement d'installations d'incinérations de déchets

(30) Priorität: 09.08.1994 DE 4428159
(43) Veröffentlichungstag der Anmeldung: 14.02.1996
(73) Patentinhaber: MARTIN GmbH für Umwelt- und Energietechnik, D-80807 München (DE)
(72) Erfinder: Martin, Johannes, Dipl.-Ing., D-81929 München (DE); Spichal, Peter, D-86926 Greifenberg (DE)
(74) Vertreter: Zmyj, Erwin, Dipl.-Ing., Dipl.-Wirtsch.-Ing.

(56) Entgegenhaltungen:
- DE-A- 2 617 803
- DE-A- 3 825 933
- US-A- 5 112 215
- US-A- 5 226 731
- US-A- 5 277 496
- PATENT ABSTRACTS OF JAPAN vol. 011 no. 002 (P-532) ,6.Januar 1987 & JP-A-61 181921 (MITSUBISHI HEAVY IND LTD) 14.August 1986,

## Beschreibung

Die Erfindung bezieht sich auf ein Verfahren zur Regelung der die Verbrennung beeinflussenden Parameter bei Verbrennungsanlagen, insbesondere Abfallverbrennungsanlagen, bei dem die sich aus der Verbrennung ergebende Temperatur allein oder in Verbindung mit anderen Regelgrößen als direkte oder indirekte Regelgröße verwendet wird.

Bei bekannten Regelverfahren, bei denen die Verbrennungstemperatur, sei es direkt oder indirekt, als Regelgröße herangezogen wird, wird diese Temperatur im Feuerraum mittels Thermoelementen festgestellt. Diese sind jedoch nicht nur ungenau, sondern auch träge. Eine weitaus bessere Methode zur Erfassung der Temperatur im Feuerraum stellt die Messung mittels Thermographiekamera dar, mit deren Hilfe beispielsweise die Temperaturverteilung über dem gesamten Brennbett erfaßt werden kann. Da die Thermographiekamera in Verbindung mit programmierbaren Rechnern einen hohen technischen Aufwand und damit sehr hohe Kosten zur Folge hat, wird häufig auf den Einsatz dieses technischen Mittels, insbesondere, wenn es sich um Nachrüstungen älterer Anlagen handelt, verzichtet.

Aus der DE-A-2 617 803 ist ein Verfahren zur Messung von Temperaturen an Anlagen zur thermischen Behandlung von körnigem Gut, insbesondere an Anlagen zur Zementherstellung bekannt, bei welchem an verschiedenen Stellen der Anlage zur Zementherstellung Temperaturen zur Erzeugung eines Meßsignales unter Ausnutzung der Infrarotstrahlung gemessen werden. Dabei wird in erster Linie die Temperatur des zu behandelnden Gutes innerhalb eines Drehrohrofens aber auch die Temperatur der den Drehrohrofen verlassenden Gase gemessen, wobei die Messung stets von einer Festkörperstrahlung Gebrauch macht. Hierzu werden in den Gasstrom Strahlungskörper eingesetzt, die mit entsprechenden Infrarotmeßgeräten beobachtet werden. Die Messung erfolgt dabei in einem Spektralbereich von 1 bis 3 µm. Die Messung der Abgastemperaturen wird zur Erzeugung von Signalen eingesetzt, um Steuerungssignale für die Beeinflussung der dem Drehrohrofen nachgeschalteten Anlagen, wie z.B. einer Vorwärmeinrichtung für das zu behandelnde Gut einer Gaskonditionierungseinrichtung oder eines Elektrofilters für die Reinigung der Abgase zu erhalten. Der auf das zu behandelnde Gut gerichtete Sensor, der ebenso wie die übrigen Sensoren eine Festkörperstrahlung erfaßt, liefert ein Signal zur Regelung der Brennerflamme, die die für die Wärmebehandlung notwendige Energie liefert. In diesem Raum wird zwar der Sensor von der direkten Einstrahlung durch die Brennerflamme abgeschirmt, eine Abschirmung gegenüber der Sekundärstrahlung, die zwangsläufig in diesem Drehrohrofen herrscht, erfolgt dagegen nicht. Zwar ist bei den weiter entfernt außerhalb des Drehrohrofens angeordneten Sensoren zwangsläufig eine Abschirmung gegenüber der an der Brennerflamme im Drehrohrofen ausgehenden Strahlung gegeben, doch dienen diese Sensoren nicht zur Erfassung einer Regelgröße die die Brennerflamme beeinflußt, sondern der jeweils nachgeschalteten Einrichtung, wie z.B. die Vorwärmeinrichtung, die Gaskonditionierungeinrichtung und die Elektrofiltereinrichtung. Außerdem wird die Temperatur nicht anhand einer direkten Gasstrahlungsmessung festgestellt.

Aufgabe der Erfindung ist es, eine technisch möglichst einfache und damit billige Temperaturerfassung und somit ein einfaches und dennoch wirksames Regelverfahren zur Beeinflussung der Parameter, die die Verbrennung beeinflussen, zu ermöglichen, welches sich insbesondere zur Nachrüstung älterer Verbrennungsanlagen eignet. Es wird also angestrebt eine von der Verbrennungstemperatur direkt abhängige Regelgröße in einfacher und zuverlässiger Weise für die Regelung der Feuerung zur Verfügung zu stellen.

Diese Aufgabe wird erfindungsgemäß dadurch gelöst, daß zur Erfassung dieser temperaturabhängigen Regelgröße die Temperatur der Abgase an einer sowohl von der Brennbettstrahlung als auch von der Flammenstrahlung nach Umlenkung der Abgase im Abgaszug abgeschirmten Stelle mittels einer Infrarotmeßeinrichtung in einem Spektralbereich von ungefähr 4,5 µm direkt gemessen wird.

Hierdurch werden die aufgrund der Festkörperstrahlung, die vom glühenden Brennbett ausgeht oder Einflüsse, die sich aus der Flammenstrahlung ergeben, ausgeschieden, so daß eine Regelgröße erhalten wird, die sehr genau der bei der Verbrennung entstehenden Temperatur proportional ist. Durch die Verwendung dieser Regelgröße können sämtliche, bisher in direkter oder indirekter Abhängigkeit von der Verbrennungstemperatur geregelten Vorgänge, auf einer genauen Grundlage beruhend, nahezu verzögerungsfrei beeinflußt werden.

Eine besonders gute Abschirmung gegenüber störenden Strahlungseinflüssen bei der Erfassung der temperaturabhängigen Regelgröße wird bei einer Verbrennungsanlage mit einem aufsteigenden und einem sich an eine Umlenkkante anschließenden absteigenden Abgaszug dadurch erreicht, daß die Messung der Temperatur der Abgase bzw. des Vergleichskörpers im absteigenden Abgaszug erfolgt. In diesem Bereich sind Strahlungseinflüsse, die vom Brennbett oder der Flamme ausgehen, weitgehend ausgeschlossen.

In der Praxis wird für die Abgastemperaturmessung ein Infrarot-Strahlungspyrometer KT19.61 und KT19.62 der Firma Heimann verwendet.

Aufgrund des weiter oben erläuterten grundsätzlichen erfindungsgemäßen Verfahrens ist es nun möglich, ein Regelungsverfahren für eine Verbrennungsanlage anzubieten, das insbesondere dann vorteilhaft ist, wenn geringere Investionsmittel zur Verfügung stehen oder eine ältere Anlage modernisiert werden soll.

Bei einer bevorzugten Ausgestaltung ist das erfindungsgemäße Verfahren dadurch gekennzeichnet, daß die im Abgas gemessene temperaturabhängige Regelgröße zur Regelung der Brennstoffzufuhr und/oder der Verbrennungsrostgeschwindigkeit dient, und daß die Primärluftzufuhr in Abhängigkeit vom Dampfmassenstrom geregelt wird.

Die Verwendung des Dampfmassenstromes als Regelgröße zur Beeinflussung der Primärluft oder der Brennstoffzufuhr ist ebenso allgemein bekannt wie z.B. die Verwendung des O₂-Gehaltes im Abgas, jedoch hat es sich herausgestellt, daß die nun vorgeschlagene Kombination bei der Verwendung der an sich bekannten Regelgröße auf der Grundlage des Dampfmassenstromes in Verbindung mit der erfindungsgemäß erhaltenen temperaturabhängigen Regelgröße zu überraschend guten Ergebnissen bei geringen Investitionskosten führt, zumal bei bereits älteren Verbrennungsanlagen die Einrichtungen für die Ableitung der auf dem Dampfmassenstrom beruhenden Regelgröße häufig bereits vorhanden sind.

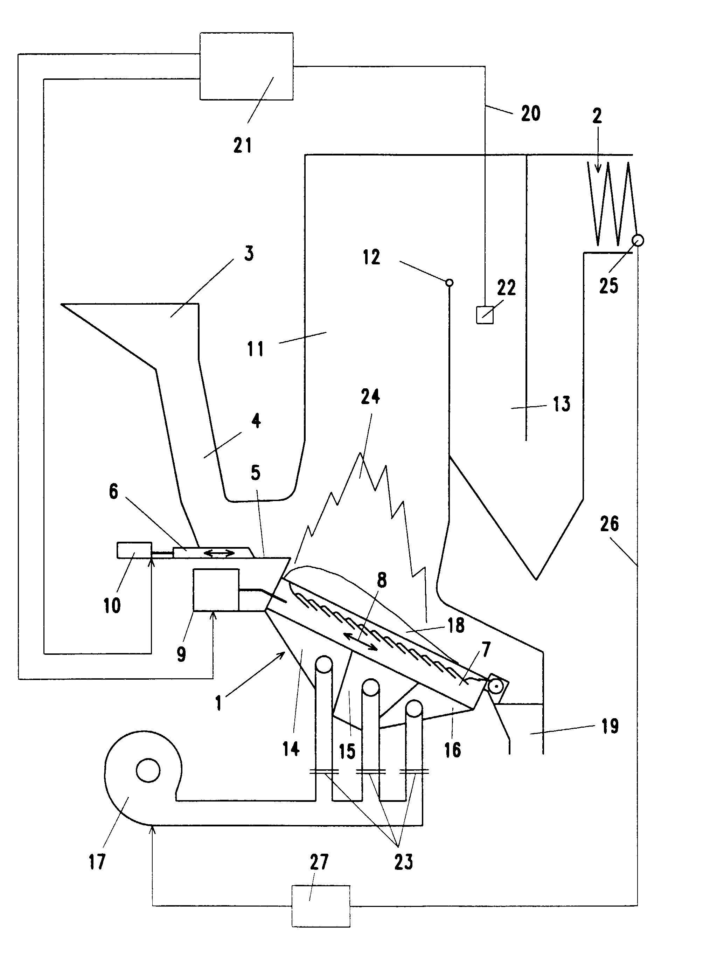

Die Erfindung wird nachstehend anhand eines in der Zeichnung schematisch dargestellten Ausführungsbeispieles näher erläutert, wobei die einzige Figur einen Schnitt durch eine Verbrennungsanlage zeigt.

Wie aus der schematischen zeichnerischen Darstellung ersichtlich, umfaßt eine Verbrennungsanlage eine Feuerung 1 und einen Kessel 2. Die Feuerung 1 weist einen Aufgabetrichter 3 mit anschließender Aufgabeschurre 4, einen Aufgabetisch 5 und Beschickstößel 6 auf, die den in der Aufgabeschurre 4 herabfallenden Müll über den Aufgabentisch auf einen Feuerungsrost 7 aufgeben, der im dargestellten Beispiel als Rückschubrost ausgeführt ist und entsprechend dem Doppelpfeil 8 Schürbewegungen ausführen kann, wobei der Antrieb des Feuerungsrostes 7 mit 9 bezeichnet ist. Der Antrieb für die Beschickstößel 6 ist mit 10 bezeichnet. Weiterhin umfaßt die Feuerung einen aufsteigenden Abgaszug 11 und einen sich an eine Umlenkkante 12 anschließenden absteigenden Abgaszug 13, über den die heißen Abgase zu dem nachgeschalteten Kessel 2 und weiteren Einrichtungen, wie z.B. nicht dargestellte Abgasreinigungsanlagen gelangen. Unterhalb des Feuerungsrostes 7 befinden sich einzelne Unterwindzonen 14, 15 und 16, die von einem gemeinsamen Gebläse 17 beaufschlagt werden, wobei Regeleinrichtungen 23 in den Zuführungsleitungen zu den Unterwindzonen vorgesehen sind, um die von unten zugeführte Primärluft auf die einzelnen Unterwindzonen entsprechend dem jeweiligen Bedarf aufteilen zu können.

Der auf dem Feuerungsrost 7 befindliche Brennstoff bildet das Brennstoffbett 18, wobei die am Ende des Feuerungsrostes anfallende Schlacke in einen Schlackenfallschacht 19 fällt.

Zur Regelung der Feuerung bzw. der Feuerleistung wird gemäß dem dargestellten Ausführungsbeispiel die Verbrennungstemperatur bzw. eine hierzu direkt proportionale Temperatur einerseits und der Dampfmassenstrom andererseits als Regelgrößen verwendet. Dabei wird die Verbrennungstemperatur durch Messung der Abgastemperatur erfaßt, die als Regelgröße 20 einem Regler 21 zugeführt wird. Zur Erfassung der Regelgröße 20 dient ein Infrarotmeßgerät 22, welches gemäß der Erfindung im absteigenden Abgaszug 13 angeordnet ist. Diese Maßnahme ist deshalb getroffen worden, um bei der Messung der Temperatur der Abgase Störungen auszuschließen, die sich aus der Strahlung des Brennbettes 18 oder der Flammen 24 ergeben. Mittels des Reglers 21 wird die Brennstoffzufuhr, d.h. die je Zeiteinheit aufzugebende Müllmenge durch Beeinflussung des Antriebes 10 für die Beschickstößel 6 geregelt und außerdem kann von dem Regler 21 aus auch der Antrieb 9 für die Schürgeschwindigkeit des Feuerungsrostes 7 geregelt werden, um so die Verteilung und die Bewegungsgeschwindigkeit des Brennstoffes im Brennstoffbett 18 auf dem Feuerungsrost 7 beeinflussen zu können.

Gleichzeitig wird bei 25 der Dampfmassenstrom m_{D} gemessen und diese Regelgröße 26 wird einem weiteren Regler 27 zugeführt, welcher die Leistung des Ventilators 17 und damit die Primärluftmenge insgesamt und/oder die Regeleinrichtungen 23 der Primärluft zu den einzelnen den Unterwindzonen 14, 15, 16 zugeordneten Rostzonen beeinflußt.

Dieses soeben beschriebene Verfahren stellt nur eines von mehreren Beispielen dar, um aufzuzeigen, daß es mit einfachen Mitteln möglich ist, eine zur Verbrennungstemperatur proportionale Regelgröße für die Beeinflussung des Verbrennungsvorganges abzuleiten. Im dargestellten Ausführungsbeispiel ist die temperaturabhängige Regelgröße für die Beeinflussung der Brennstoffzufuhr eingesetzt und mit einer weiteren Regelgröße, die vom Dampfmassenstrom abgeleitet ist, kombiniert, wobei die letztere Regelgröße zur Beeinflussung der Primärluftzuführung dient. Selbstverständlich kann die temperaturabhängige Regelgröße auch mit anderen Regelgrößen als dem Dampfmassenstrom kombiniert werden und außerdem ist es auch möglich, daß die temperaturabhängige Regelgröße nicht direkt zur Beeinflussung beispielsweise der Brennstoffzufuhr, sondern nur indirekt zur Beeinflussung des Verbrennungsvorganges eingesetzt werden kann, wie dies beispielsweise zur Beeinflussung des O_{2-feucht}-Sollwertes gemäß DE 38 25 933 C2 der Fall ist. Dort wird ein vorgegebener O_{2-feucht}-Sollwert in Abhängigkeit von der Feuerraumtemperatur verändert. Die vorliegende Erfindung ermöglicht somit eine präzise und verzögerungsfreie Erfassung einer der Verbrennungstemperatur unmittelbar proportionalen Regelgröße, die Veränderungen des Verbrennungsvorganges vermittelt, die sich in Änderungen der Verbrennungstemperatur äußern.

## Patentansprüche

1. Verfahren zur Regelung der die Verbrennung beeinflussenden Parameter bei Verbrennungsanlagen, insbesondere Abfallverbrennungsanlagen, bei dem die sich aus der Verbrennung ergebende Temperatur allein oder in Verbindung mit anderen Regelgrößen als direkte oder indirekte Regelgröße verwendet wird, **dadurch gekennzeichnet,** daß zur Erfassung dieser temperaturabhängigen Regelgröße die Temperatur der Abgase an einer sowohl von der Brennbettstrahlung als auch von der Flammenstrahlung nach Umlenkung der Abgase im Abgaszug abgeschirmten Stelle mittels einer Infrarotmeßeinrichtung in einem Spektralbereich von ungefähr 4,5 µm direkt gemessen wird.

2. Verfahren nach Anspruch 1, **dadurch gekennzeichnet,** daß die Temperaturmessung durch ein Infrarot-Pyrometer erfolgt.

3. Verfahren nach Anspruch 1 oder 2, bei einer Verbrennungsanlage mit einem aufsteigenden und einem sich an eine Umlenkkante anschließenden absteigenden Abgaszug, **dadurch gekennzeichnet,** daß die Messung der Temperatur der Abgase bzw. des Vergleichskörpers im absteigenden Abgaszug erfolgt.

4. Verfahren nach einem der Ansprüche 1 bis 3, **dadurch gekennzeichnet,** daß die im Abgas gemessene temperaturabhängige Regelgröße zur Regelung der Brennstoffzufuhr und/ oder der Verbrennungsrostgeschwindigkeit dient und daß die Primärluftzufuhr in Abhängigkeit vom Dampfmassenstrom geregelt wird.

## Claims

1. Method for regulating the parameters affecting incineration in incineration plants, in particular waste incineration plants, in which the temperature resulting from incineration is used on its own or in combination with other regulating variables as a direct or indirect regulating variable, characterised in that, to detect this temperature-dependent regulating variable, the temperature of the waste gases is measured directly at a point which is shielded both from the fuel bed radiation and from the flame radiation after deflection of the waste gases in the waste gas flue by means of an infrared measuring device in a spectral region of approximately 4.5 µm.

2. Method according to claim 1, characterised in that the temperature is measured by an infrared pyrometer.

3. Method according to claim 1 or 2, in an incineration plant with an ascending waste gas flue and a descending waste gas flue adjoining a deflecting edge, characterised in that the temperature of the waste gases or of the reference body in the descending waste gas flue is measured.

4. Method according to any of claims 1 to 3, characterised in that the temperature-dependent regulating variable measured in the waste gas is used to regulate the fuel supply and/or the speed of the combustion grate, and in that the primary air supply is regulated as a function of the steam mass flow rate.

## Revendications

1. Procédé de régulation des paramètres influençant la combustion dans des installations d'incinération, en particulier des installations d'incinération de déchets, dans lequel procédé la température résultant de la combustion sera utilisée, seule ou combinée à d'autres valeurs de réglage, en tant que valeur de réglage directe ou indirecte, caractérisé en ce que pour l'enregistrement de cette valeur de réglage dépendant de la température, il faut mesurer directement la température des gaz d'échappement à l'aide d'un dispositif de mesure à rayonnement infrarouge dans un domaine spectral de 4,5 µm environ, monté dans une zone protégée non seulement contre le rayonnement émis par le lit de combustion, mais aussi contre le rayonnement émis par les flammes, laquelle zone est située dans la zone de tirage des gaz d'échappement, disposée après la déviation des gaz d'échappement.

2. Procédé selon la revendication 1, caractérisé en ce que la température est mesurée par un pyromètre à rayonnement infrarouge.

3. Procédé selon la revendication 1 ou 2, dans une installation d'incinération munie d'une zone de tirage ascendant des gaz d'échappement à laquelle succède, après le passage autour d'un déflecteur, une zone de tirage descendant des gaz d'échappement, caractérisé en ce que la température des gaz d'échappement ou du corps de référence est mesurée dans la zone de tirage descendant des gaz d'échappement.

4. Procédé selon l'une quelconque des revendications 1 à 3, caractérisé en ce que la valeur de réglage, qui dépend de la température et qui a été mesurée dans les gaz d'échappement, est utilisée pour réguler le chargement du combustible et/ou la vitesse de la grille de combustion, et en ce que l'admission d'air primaire est régulée en fonction du flux massique de la vapeur.
